# EUROPEAN PATENT APPLICATION

(11) **EP 0 918 079 A1**
(43) Date of publication of application: **26.05.1999**
(21) Application number: 98203928.1
(22) Date of filing: 23.11.1998
(51) Int. Cl.: C09J 7/02, A47G 1/17, F16B 47/00

(54) **Adhesive mounting means with multilayer support**

(30) Priority: 24.11.1997 NL 1007603
(71) Applicant: Hooft, Johannes Wilhelmus Gerardus, 4124 AV Hagestein (NL)
(72) Inventor: Hooft, Johannes Wilhelmus Gerardus, 4124 AV Hagestein (NL)
(74) Representative: Van den Heuvel, Henricus Theodorus

(57) **Abstract**

A mounting means comprises a foam foil (1) which is covered at least on one of its sides with a carrier foil (2,3). The carrier foil (2,3) is provided on its side remote from the foam foil with an adhesive layer (4). The invention thus starts from a foam foil as basic material in order to give the mounting means sufficient capacity to counteract irregularities in a surface. However, because according to the invention the adhesive layer is arranged first via a carrier foil, the unit can still be removed in its entirety without leaving traces of foam on the surface.

## Description

The present invention relates to a mounting means comprising a foam foil which is provided at least on one side with an adhesive layer.

Such a mounting means is frequently applied for fixing all manner of objects to for instance the wall of a room. The foamed layer serves herein to counteract any unevenness in the wall so as to maintain an effective and full adhesion area for the adhesive layer. A drawback of such a known mounting means is however that it is difficult to remove afterwards. If the mounting means is pulled from the wall, foam remnants generally remain behind of the foam foil which has insufficient internal strength to withstand the so-called peeling strength of the adhesive layer used.

In order to obviate this drawback, an alternative mounting means which is widely available starts from a foil of synthetic rubber, in particular butylene rubber, which in contrast does have sufficient internal strength to enable it to be removed in its entirety. A drawback of this basic material however is the cost price, which is markedly higher than that of ordinary foam foils, and the considerably smaller capacity to counteract unevenness in a surface for connecting. Furthermore, the glue used for the adhesive layer is generally mixed with the rubber to provide the adhesive layer with sufficient anchorage in the rubber foil. However, this imposes a significant limitation on the applicable glues, which thus remain limited to rubber-based glues which in general are only moderately ageing-resistant. In this known mounting means the rubber foil must further be stretched in length direction to allow simple, damage-free and trace-free removal. This imposes significant limitations on the possible applications which are therefore limited to those cases wherein the mounting means always remains easily accessible on both sides. Objects which take up a considerably larger surface area than the mounting means cannot for instance be mounted centrally and then removed with the known mounting means.

The present invention has for its object to provide a mounting means of the type stated in the preamble which combines the advantages of both the above mentioned mounting means but which is free of the described drawbacks.

In order to achieve the stated objective, a mounting means of the type stated in the preamble has the feature according to the invention that the foil is covered on said side with a carrier foil on which the above stated adhesive layer is arranged on a side remote from the foam foil. The invention thus starts from a foam foil as basic material in order to give the mounting means sufficient capacity to counteract irregularities in a surface. However, because according to the invention the adhesive layer is arranged first via a carrier foil, the whole unit can still be removed in its entirety without leaving traces of foam on the surface. For the carrier foil a suitable foil material can simply be chosen which has sufficient internal strength to withstand the peeling strength of the adhesive layer without this necessarily imposing limitations on the range of applicable adhesives. The attached object can be pulled loose from the surface together with the mounting means or first pulled loose with a part of the mounting means, in particular a part of the foam foil, whereafter the remaining part of the mounting means can be removed from the surface using the carrier foil and without leaving traces.

In a particular embodiment the mounting means according to the invention has the feature that the adhesive layer comprises a self-adhesive layer. Such a self-adhesive layer simplifies fixing with the mounting means. Prior to use the self-adhesive layer is covered with an easily removable screening foil. By removing this latter the adhesive layer is exposed and the means can be attached in simple and durable manner against a preferably smooth, fat-free surface. This particular embodiment of the mounting means according to the invention has as such the more specific feature that the self-adhesive layer comprises an acrylate glue and is covered prior to use with an easily removable screening foil.

For the purposes of a relatively easy removal, a further embodiment of the mounting means according to the invention has the feature that the carrier foil comprises on its side remote from the foam foil an edge portion which is free of the adhesive layer and, more particularly, that said edge portion comprises a continuous strip extending outside the foam foil. Owing to the absence of adhesive layer on said edge portion or said strip, the mounting means can be grasped easily on the non-adhesive edge portion and then pulled loose, this precisely because the strip protrudes outside the foam foil.

In a first further embodiment the mounting means according to the invention has the feature that the foam foil is provided on both sides with a carrier foil with an adhesive layer which may or may not be the same. The invention hereby provides a two-sided adhesive foil or tape with the above stated advantages. Such an embodiment lends itself to countless applications wherein two objects must be mutually connected or wherein an object must be fixed against any random surface, for instance against a door, window or wall of or in a room, this including a floor and ceiling.

In a second further embodiment the mounting means according to the invention has the feature that the foam foil comprises on a first side the carrier foil with the adhesive layer and on an opposite side is adhered to a mounting member. This latter is for instance a finished product such as a suspension hook which can thus be attached in simple manner against a wall.

The invention will be further elucidated hereinbelow with reference to an embodiment and an associated drawing. In the drawing:
- figure 1: shows a first embodiment of a mounting means according to the invention; and
- figure 2: shows a second embodiment of a mounting means according to the invention.

The figures are otherwise purely schematic and not drawn to scale. For the sake of clarity some dimensions in particular are highly exaggerated. Corresponding parts are designated in the figures as far as possible with the same reference numeral.

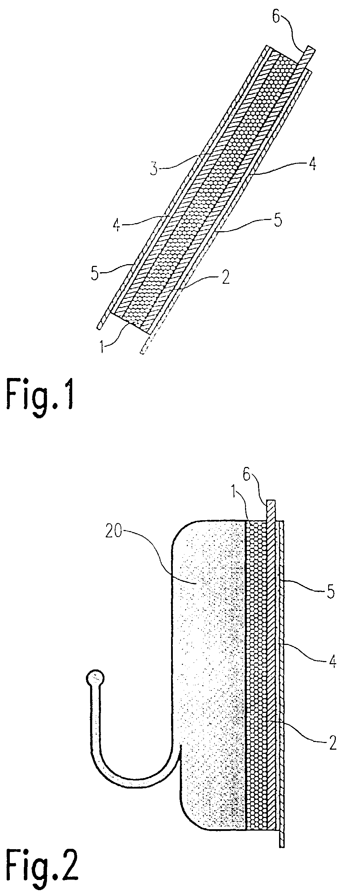

In the embodiment of figure 1 the mounting means comprises a foam foil 1 of polyethylene, polyvinyl chloride or another suitable plastic which allows of processing to a foam foil. In this embodiment foil 1 has a thickness of about 2 mm, but a different thickness, for instance varying from 1 mm to about 5 mm, is also possible within the scope of the invention in accordance with irregularities to be counteracted in the end surface.

Situated on either side of foam foil 1 is a carrier foil 2,3, in this embodiment of polyester with a thickness typically in the order of magnitude of 50 µm to 200 µm. Instead of polyester another suitable material can also be applied which, in relatively thin foil form, is able to withstand the peeling strength of the adhesion to the surface. Other examples in this respect are for instance polyvinyl chloride and polyurethane. Both carrier foils 2,3 are provided on their side remote from foam foil 1 with a self-adhesive layer 4 of a suitable acrylate resin which is in turn covered with a screening foil 5. At least one of the two carrier foils is herein free of the resin layer 4 along a continuous strip 6 on its side remote from the foam foil. This strip 6 extends outside the area of the foam foil and is thus easy to grasp. Not only does this facilitate the removal of screening foil 5 but, more importantly still, such a non-adhesive portion of the carrier foil ensures a comparatively simple removal of the mounting means once it has been arranged. The mounting means can then be grasped easily on this glue-free portion and pulled loose. Instead of a fully continuous strip it is also possible to suffice, as the occasion arises, with only one edge portion, for instance on one of the corners, which can then be arranged simply as a tab.

This embodiment thus provides an exceptionally durable and adequate mounting means which can be employed for instance in the form of two-sided adhesive tape or in the form of a two-sided adhesive element for rapid mounting of all manner of objects.

In a second embodiment as shown in figure 2, the mounting means again comprises a foam foil 1 of for instance polyethylene or polyvinyl chloride having arranged thereon a carrier 2 of polyester and a self-adhesive layer 4 of a suitable acrylate resin covered with an adequate but easily removable screening foil 5. On the side opposite carrier 2 the foam foil 1, otherwise than in the foregoing embodiment, is permanently glued or otherwise connected to a mounting member 20 in the form of a suspension hook from which for instance a towel, dishcloth or an article can be suspended. The invention hereby provides a finished product which as a result of the invention can be durably attached in simple and rapid manner to a wall of or in for instance a room but which can nevertheless be easily removed without foam traces. For this purpose an edge portion of carrier foil 2 is preferably also free of an adhesive layer in this embodiment.

Although the invention has been further elucidated and specified with sole reference to the above described embodiments, it will be apparent to all that the invention is in no way limited to the given examples. On the contrary, for a skilled person many more variations and embodiments are possible without departing from the scope of the invention. An adhesive layer which acquires adhesive properties only after the layer has been activated for instance thermally or by means of actinic radiation can thus be applied for instance instead of a self-adhesive layer.

In addition, the mounting means can be integrated with the object for fixing, such as for instance an air freshener or the like. The mounting means can in that case be attached in self-adhesive manner to the object but may also be glued to the object in the factory.

Finally, it is noted that application of the invention is not limited to a mounting means taking the form of an element of a determined size but can on the contrary be envisaged in the form of a long ribbon, strip or tape, which may or may not be initially in rolled-up state.

## Claims

1. Mounting means comprising a foam foil which is provided at least on one side with an adhesive layer, **characterized in that** the foil is covered on said side with a carrier foil on which said adhesive layer is arranged on a side remote from the foam foil.

2. Mounting means as claimed in claim 1, **characterized in that** the adhesive layer comprises a self-adhesive layer.

3. Mounting means as claimed in claim 2, **characterized in that** the self-adhesive layer comprises an acrylate glue and prior to use is covered with an easily removable screening foil.

4. Mounting means as claimed in one or more of the claims 1, 2 and 3, **characterized in that** the carrier foil comprises on its side remote from the foam foil an edge portion which is free of the adhesive layer.

5. Mounting means as claimed in claim 4, **characterized in that** said edge portion comprises a strip extending outside the foam foil.

6. Mounting means as claimed in one or more of the foregoing claims, **characterized in tha**t the foam foil comprises a plastic from a group of polyethylene and polyvinyl chloride and has a thickness of between about 1 mm and about 5 mm.

7. Mounting means as claimed in one or more of the foregoing claims, **characterized in that** the carrier foil comprises a polyester, polyvinyl chloride or polyurethane and has a thickness of between about 50 µm and about 200 µm.

8. Mounting means as claimed in one or more of the foregoing claims, **characterized in that** the foam foil is provided on both sides with a carrier foil with an adhesive layer which may or may not be the same.

9. Mounting means as claimed in one or more of the foregoing claims, **characterized in that** the foam foil comprises on a first side the carrier foil with the adhesive layer and on an opposite side is adhered to a mounting member.
